# EUROPÄISCHE PATENTSCHRIFT

(11) **EP 2 093 397 B1**
(45) Veröffentlichungstag und Bekanntmachung des Hinweises auf die Patenterteilung: **30.03.2016**
(21) Anmeldenummer: 09100009.1
(22) Anmeldetag: 05.01.2009
(51) Int. Cl.: F01N 3/20

(54) **Dosiersystem mit verbessertem Vereisungsschutz**
Metering system with improved icing protection
Système de dosage ayant une protection améliorée contre le givre

(30) Priorität: 20.02.2008 DE 102008010105
(43) Veröffentlichungstag der Anmeldung: 26.08.2009
(73) Patentinhaber: ROBERT BOSCH GMBH, 70442 Stuttgart (DE)
(72) Erfinder: Klenk, Wolfgang, 74369 Loechgau (DE)

(56) Entgegenhaltungen:
- EP-A- 1 199 449
- WO-A-2004/042207
- WO-A-2007/017080
- DE-A1-102005 025 724
- DE-A1-102006 027 487

## Beschreibung

### Stand der Technik

Die Erfindung geht aus von bekannten Verfahren und Vorrichtungen zur Nachbehandlung von Abgasen, insbesondere von Abgasen von Brennkraftmaschinen, beispielsweise im Automobilbereich, in der Energieerzeugung oder in ähnlichen Bereichen der Naturwissenschaft und Technik.

Aus derartigen Bereichen sind Techniken bekannt, bei welchen schadstoffvermindernde Medien, insbesondere fluide Medien (beispielsweise Flüssigkeiten oder Gase), in das Abgas eindosiert, beispielsweise eingesprüht, werden. Dabei werden unterschiedliche Techniken und unterschiedliche Arten von Medien eingesetzt, welche beispielsweise in DE 10 2004 004 738 A1 beschrieben sind.

Ein wesentliches Anwendungsbeispiel, auf welches die vorliegende Erfindung jedoch nicht beschränkt ist, ist das Einsprühen einer Harnstoff-Wasser-Lösung in das Abgas von Dieselmotoren, um den Anteil der Stickoxide (NOx) im Abgas zu vermindern. Dabei wird in einer Reduktionsreaktion das NOx unter Bildung von Stickstoff und Wasser zu N₂O reduziert. Auch andere Reduktionsmittel und/oder Reduktionsmittel-Vorläufer (welche sich beispielsweise erst im Abgas oder im Bereich des Abgases zum Reduktionsmittel umsetzen) sind bekannt. Derartige Verfahren werden oft auch als SCR-Verfahren (SCR: selective catalytic reduction) bezeichnet. Durch die selektive katalytische Reduktion werden beispielsweise Stickoxide mit hoher Selektivität zu Stickstoff reduziert, wodurch die Stickoxidkonzentration im Abgas deutlich verringert werden kann. Harnstoff-Wasser-Lösungen als Beispiele für Reduktionsmittel sind beispielsweise unter dem Markennamen "AdBlue" erhältlich. Durch thermische Zersetzung des Harnstoffs entsteht aus dem Harnstoff als Reduktionsmittel-Vorläufer das eigentliche Reduktionsmittel, nämlich gasförmiges Ammoniak.

Neben Verfahren und Vorrichtungen, welche auf der Verwendung von Reduktionsmitteln oder Reduktionsmittel-Vorläufern als schadstoffvermindernde Medien basieren, sind auch andere Arten von schadstoffvermindernden Medien bekannt. So wird beispielsweise, ebenfalls in DE 10 2004 004 738 A1, die nachmotorische Erwärmung von Abgas durch Einspritzen von Kraftstoff in den Abgasstrang beschrieben, wodurch die zur Regeneration von nachgeschalteten Katalysatoren oder Dieselpartikelfiltern erforderlichen Abgastemperaturen erreicht werden. Hierbei handelt es sich also um ein Beispiel eines "indirekt" schadstoffvermindernden Mediums, dessen Einbringung in das Abgas jedoch ebenfalls allgemein dem Zweck der kurzfristigen, mittelfristigen oder langfristigen Schadstoffverminderung dient. Zahlreiche andere Ausführungsbeispiele schadstoffvermindernder Medien sind bekannt.

Eine wesentliche Herausforderung bei bekannten schadstoffvermindernden Systemen und Dosiervorrichtungen besteht darin, diese frostsicher auszugestalten. So werden insbesondere, wie oben dargestellt, in vielen Fällen wässrige Systeme als schadstoffvermindernde Medien verwendet, beispielsweise das genannte AdBlue. Insbesondere bei diesen Systemen muss jedoch gewährleistet werden, dass diese Systeme frostsicher ausgestaltet werden und keine Frostschäden durch Auffrieren erleiden. Zu diesem Zweck werden in vielen aus dem Stand der Technik bekannten Systemen die Komponenten des Systems im Abstellfall entweder mittels Druckluft ausgeblasen oder das schadstoffvermindernde Medium beispielsweise durch eine Pumpe zurückgesaugt. Bekannte Dosiervorrichtungen und Dosiersysteme besitzen beispielsweise einen Vorratstank für das schadstoffvermindernde Medium, beispielsweise eine Harnstoff-Wasser-Lösung.

Diese Vorratstanks können auf verschiedene Weise ausgestaltet sein. So haben sich beispielsweise Vorratstanks bewährt, in welchen ein so genannter Schwall- oder Heiztopf eingebaut wird. Dieser Schwall- oder Heiztopf als Innentank sorgt beispielsweise für einen Ausgleich von mechanischen Schwankungen und somit eine gleichmäßigere und stabilere Förderung des schadstoffvermindernden Mediums. Weiterhin lässt sich beispielsweise lediglich der Innentank beheizen, so dass ein kleineres Volumen des schadstoffvermindernden Mediums aufgetaut werden muss. Mit einem Fördermodul, welches eine Pumpe, beispielsweise eine Membranpumpe enthält, wird das schadstoffvermindernde Medium gefördert.

Die Ansaugung des schadstoffvermindernden Mediums aus dem Vorratstank, insbesondere einem Vorratstank mit einem Innentank, erfolgt aus funktionalen Gründen in vielen Fällen über zwei Saugstellen. Die eine Saugstelle fördert schadstoffverminderndes Medium aus dem Schwalltopf heraus, wohingegen die andere Saugstelle schadstoffverminderndes Medium aus dem eigentlichen Tank fördert. In aktuellen Systemen ist die Pumpe dabei in der Regel mit beiden Saugstellen verbunden, so dass aus beiden Saugstellen gleichzeitig gefördert wird. Wenn die zweite Saugstelle beispielsweise durch Eis blockiert ist, wird wegen dieser Blockade automatisch nur aus der zweiten Saugstelle gefördert, an welcher beispielsweise mittels einer Heizung für Flüssigkeit gesorgt sein kann.

Das gesamte Dosiersystem, umfassend den Vorratstank, den Schwalltopf, die Saugstellenposition, eine Heizung und ähnliches, muss konstruktiv und elektrisch dabei derart ausgelegt werden, dass die zweite Saugstelle nicht zu früh, jedoch auch nicht zu spät durch die Heizung aufgetaut wird. Erfolgt dies nicht, so wird spätestens nach einer kurzen Zeit Luft angesaugt, und das System ist damit nicht mehr dosierbereit.

Aus der DE 10 2005 025 724 ist es bekannt, ein Dosiersystem mit zwei Ansaugstellen vorzusehen, wobei mittels eines Umschaltventils zwischen den Ansaugstellen umgeschaltet werden kann.

### Offenbarung der Erfindung

Die Erfindung geht aus von bekannten Dosiersystemen, wie beispielsweise im oben beschriebenen Dosiersystem. Das Dosiersystem dient dem Dosieren eine schadstoffvermindernden Mediums in ein Abgas, insbesondere zum Einbringen eines Reduktionsmittels und/oder eines Reduktionsmittel-Vorläufers in das Abgas. Zu diesem Zweck kann das Dosiersystem beispielsweise mit einem oder mehreren Dosierventilen und/oder Dosiermodulen gekoppelt sein oder derartige Dosierventile und/oder Dosiermodule selbst umfassen. Auf diese Weise können beispielsweise flüssige, gasförmige oder feste schadstoffvermindernde Medien, wie beispielsweise die oben beschriebene Harnstoff-Wasser-Lösung, in das Abgas eindosiert werden. Bezüglich der möglichen Ausgestaltungen des schadstoffvermindernden Mediums kann weitgehend auf die obige Beschreibung verwiesen werden.

Das Dosiersystem umfasst einen Vorratstank zum Bereitstellen des schadstoffvermindernden Mediums. Dieser Vorratstank kann, entsprechend der Eigenschaften des schadstoffvermindernden Mediums, beispielsweise zur Bevorratung eines flüssigen und/oder gasförmigen und/oder festen Vorrats des schadstoffvermindernden Mediums ausgestaltet sein. Auch eine Bevorratung mehrerer schadstoffvermindernder Medien, beispielsweise mehrere verschiedener schadstoffvermindernder Medien, ist möglich.

Weiterhin umfasst das Dosiersystem ein Ansaugsystem zum Ansaugen des mindestens einen schadstoffvermindernden Mediums aus dem Vorratstank. Dieses Ansaugsystem kann beispielsweise ganz oder teilweise in einem Fördermodul integriert sein. Insbesondere kann das Ansaugsystem eine oder mehrere Pumpen umfassen, insbesondere eine oder mehrere Förderpumpen. Diese Förderpumpen können beispielsweise mindestens eine Membranpumpe umfassen. Das Ansaugsystem kann beispielsweise mindestens zwei Ansaugleitungen umfassen, sowie gegebenenfalls weitere Filter, Ventile, Förderleitungen oder ähnliches. Insbesondere kann mindestens eine Förderleitung vorgesehen sein, um das schadstoffvermindernde Medium an mindestens ein Dosierventil bzw. Dosiermodul bereitzustellen.

Das Ansaugsystem umfasst mindestens zwei Ansaugstellen zum Ansaugen des schadstoffvermindernden Mediums. Erfindungsgemäß wird das Umschalten zwischen den beiden Saugstellen, im Gegensatz zu den aus dem Stand der Technik bekannten Systemen, jedoch nicht einem mehr oder weniger zufälligen Auftauen dieser beiden Ansaugstellen überlassen, sondern es wird erfindungsgemäß mindestens ein Schalter vorgesehen. Dieser Schalter ist eingerichtet, um zwischen den mindestens zwei Ansaugstellen umzuschalten. Von einem Umschalten kann dabei ein "ODER"- Umschalten und/oder ein "Entweder-Oder"-Umschalter umfasst sein, also ein Umschalten, bei welchem genau eine bestimmte der Ansaugstellen aktiv ist und/oder auch ein Umschalten, bei der in mindestens einer Schaltstellung auch mehr als eine Ansaugstelle aktiv ist. Hierbei umfasst das Ansaugsystem mindestens eine Förderpumpe. Wie oben dargestellt, kann diese Förderpumpe beispielsweise ganz oder teilweise in einem Fördermodul enthalten sein. Diese Förderpumpe kann beispielsweise genutzt werden, um schadstoffverminderndes Medium aus dem Vorratstank zu einem Dosiermodul und/oder einem Dosierventil zu fördern. Üblicherweise erzeugt die Förderpumpe zu diesem Zweck einen Systemdruck, beispielsweise einen Systemdruck zwischen 2 bar und 10 bar, vorzugsweise bei 5 bar. Erfindungsgemäß wird vorgeschlagen, das Umschalten des hydraulischen Schalters durch einen von der Förderpumpe bereitgestellten hydraulischen Druck und/oder Unterdruck zu bewerkstelligen.

Erfindungsgemäß kann das Dosiersystem besonders vorteilhaft ausgestaltet werden, wenn der Schalter derart ausgeschaltet wird, dass dieser vorzugsweise ohne einen zusätzlichen Aktor zur Betätigung des Schaltvorgangs eingesetzt werden kann. Diese Variante des vorgeschlagenen Dosiersystems ist für eine aktive Umschaltung zwischen den Ansaugstellen besonders bevorzugt, da diese besonders kostengünstig ist und, da zusätzliche Aktoren eine zusätzliche Störanfälligkeit bereiten, besonders robust ist. Auf diese Weise kann, ohne dass ein zusätzlicher Aktor im System erforderlich wäre, eine Umschaltung zwischen den Ansaugstellen erfolgen, ohne dass die Umschaltung rein durch den genannten Auftauvorgang bestimmt ist, welcher je nach Ausgangs- und Auslegungsbedingungen (beispielsweise Tanktemperatur, Temperatur im Innentank, Außentemperatur, konstruktive Auslegung, Heizleistungen etc.) verschieden ablaufen kann. Zu diesem Zweck wird vorgeschlagen, den Schalter als hydraulischen Schalter auszugestalten. Ein hydraulischer Schalter ist ein Schalter, welcher direkt oder indirekt über eine hydraulische Kraft, also eine Kraft, welche mittels eines fluiden (das heißt gasförmigen und/oder flüssigen) Mediums übertragen wird, geschaltet wird.

Das Dosiersystem kann weiterhin eine Steuerung umfassen, welche eingerichtet ist, um den Schalter umzuschalten. Diese Steuerung kann beispielsweise eine elektronische Steuerung und/oder mindestens ein Datenverarbeitungsgerät umfassen. Insbesondere kann die Umschaltung programmgesteuert erfolgen. Auf diese Weise kann beispielsweise gezielt, von Software unterstützt, eine Umschaltung zwischen mehreren Ansaugstellen vollzogen werden, um stets eine optimale Umschaltung bei allen Betriebszuständen und/oder Betriebstemperaturen gewährleisten zu können. Auf diese Weise kann insbesondere eine Ansaugung von Luft verhindert werden.

Insbesondere kann die Steuerung eingerichtet sein, um die Ansaugung zu überwachen und eine Fehlfunktion in der Ansaugung festzustellen und/oder vorherzusagen. Diese Überwachung kann beispielsweise mittels Füllstandssensoren, Frostsensoren, Eisdetektoren, Partikeldetektoren, Temperatursensoren, Drucksensoren, Durchflussmessern oder ähnlichem erfolgen, welche einzeln oder in Kombination in dem Dosiersystem umfasst und mit der Steuerung verbunden sein können. Die Steuerung kann dann eingerichtet sein, um bei einer Detektion und/oder Vorhersage einer Fehlfunktion auf eine andere Ansaugstelle umzuschalten. Auf diese Weise kann beispielsweise verhindert werden, dass Luft angesaugt wird oder dass eine eingefrorene Ansaugstelle verwendet wird.

Der Vorratstank kann mindestens einen Innentank umfassen, insbesondere einen beheizbaren Innentank. Beispielsweise kann dieser Innentank, wie oben dargestellt, als Schwalltopf und/oder als Heiztopf ausgestaltet sein und ein kleineres Volumen umfassen als der gesamte Vorratstank. Insbesondere kann der Innentank beheizbar ausgestaltet sein, wofür beispielsweise verschiedene Heizelemente eingesetzt werden können. Im Falle der Verwendung eines Innentanks ist es besonders bevorzugt, wenn mindestens eine erste der Ansaugstellen innerhalb des Innentanks angeordnet ist und wenn mindestens eine zweite der Ansaugstellen außerhalb des Innentanks angeordnet ist. Auf diese Weise kann stets eine optimale Ansaugung gewährleistet werden.

Da üblicherweise bereits Pumpen, wie beispielsweise Membranpumpen, in dem Dosiersystem vorhanden sind, welche auch in einer Doppelfunktion als Förderpumpen genutzt werden könnten, ist üblicherweise in dem Dosiersystem schon eine Ansteuerelektronik enthalten, mittels derer beispielsweise die Leistung der Förderpumpe gesteuert werden kann. So kann beispielsweise ein Umschalten zwischen den Ansaugstellen durch eine Änderung der Pumpenleistung der Förderpumpe erfolgen. Die Pumpenleistung kann beispielsweise durch eine Datenverarbeitungsrichtung programmgesteuert erfolgen. Diese Datenverarbeitungseinrichtung kann beispielsweise in einer Pumpensteuerung der Förderpumpe enthalten sein.

Alternativ oder zusätzlich kann die Datenverarbeitungseinrichtung jedoch auch in der oben bereits erwähnten optionalen Steuerung umfasst sein, welche naturgemäß auch eine Pumpensteuerung der Förderpumpe umfassen kann.

Diese vorgeschlagene Weiterentwicklung der Erfindung, die Förderpumpe zum Umschalten des hydraulischen Schalters zu verwenden, bietet zahlreiche Vorteile hinsichtlich der Ausgestaltung des Dosiersystems. So kann auf diese Weise das Dosiersystem besonders einfach und kostengünstig ausgestaltet werden. Aufgrund der Einfachheit des Systems ist das Gesamtsystem auch äußerst robust und störungsunempfindlich. Das Potential der im System verwendeten Förderpumpe, Drücke darzustellen, welche deutlich höher sind als der in der Regel eingestellte Systemdruck (beispielsweise 5 bar, siehe oben), kann erfindungsgemäß für das Umschalten genutzt werden. Die Umschaltung, welche beispielsweise softwaregesteuert erfolgen kann, bewirkt, dass nur wenige hydraulische Komponenten benötigt werden. Diese können das System deutlich leistungsfähiger machen, wobei jedoch die Kosten nicht deutlich nach oben getrieben werden.

Der hydraulische Schalter kann insbesondere mindestens einen beweglich gelagerten Ventilkolben umfassen, welcher an mindestens einer Seite mit einer hydraulischen Kraft beaufschlagt wird. Unter einer "hydraulischen Kraft" ist dabei eine durch ein hydraulisches Medium (das heißt ein Fluid) übertragene Kraft zu verstehen, also insbesondere eine Kraft infolge eines Druckes und/oder eines Unterdruckes. Dabei kann der Ventilkolben an mindestens einer zweiten Seite, welche gleich oder verschieden zu der ersten Seite sein kann, mit einer Kraft durch einen mechanischen Energiewandler, insbesondere eine Federkraft, beaufschlagt werden. Der Ventilkolben kann insbesondere mindestens eine gemeinsame Ansaugbohrung umfassen, wobei die gemeinsame Ansaugbohrung in mindestens einer ersten Schaltstellung des Ventilkolbens mit einer ersten Ansaugbohrung verbunden sein kann. Diese erste Ansaugbohrung kann beispielsweise mit einer ersten der Ansaugstellen verbunden sein. In mindestens einer zweiten Schaltstellung kann dann die gemeinsame Ansaugbohrung mit mindestens einer zweiten Ansaugbohrung in Verbindung stehen, welche ihrerseits beispielsweise wiederum mit einer zweiten der Ansaugstellen in Verbindung stehen kann.

### Kurze Beschreibung der Zeichnungen

Ausführungsbeispiele der Erfindung sind in den Zeichnungen dargestellt und in der nachfolgenden Beschreibung näher erläutert.

Es zeigen:
- Figur 1: ein Ausführungsbeispiel eines erfindungsgemäßen Dosiersystems; und
- Figur 2: eine vergrößerte schematische Darstellung eines in dem Dosiersystem gemäß Figur 1 verwendeten hydraulischen Schalters.

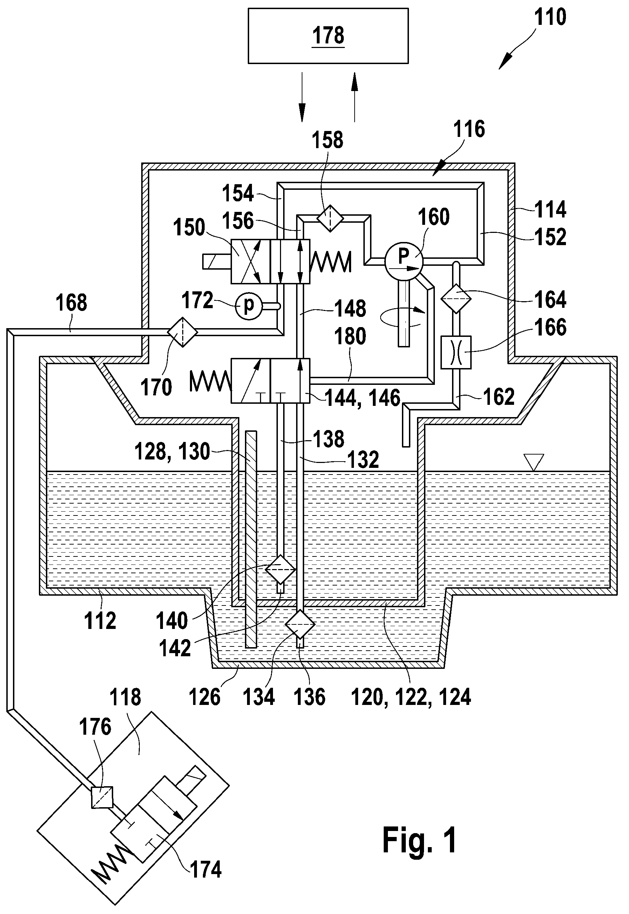

In Figur 1 ist in stark schematisierter Darstellung ein Ausführungsbeispiel eines erfindungsgemäßen Dosiersystems 110 dargestellt. Das Dosiersystem 110 umfasst einen Vorratstank 112 sowie ein in diesem Ausführungsbeispiel in ein Fördermodul 114 integriertes Ansaugsystem. Optional umfasst das Dosiersystem 110 in dem in Figur 1 dargestellten Ausführungsbeispiel weiterhin ein Dosiermodul 118, wobei dieses Dosiermodul 118 jedoch auch separat von dem genannten Dosiersystem 110 eingesetzt werden kann und lediglich mit dem Dosiersystem 110 verbunden sein kann.

Der Vorratstank 112 umfasst in dem in Figur 1 dargestellten Ausführungsbeispiel einen Tankeinsatz 120 mit einem Innentank 122, welcher in diesem Ausführungsbeispiel als Heiztopf 124 ausgestaltet ist. Über einen Füllstandssensor 128 und einen Temperatursensor 130 können der Füllstand bzw. die Temperatur in dem Vorratstank 112 bzw. dem Heiztopf 124 überwacht werden, wobei die Überwachung vorzugsweise an verschiedenen Stellen stattfinden kann.

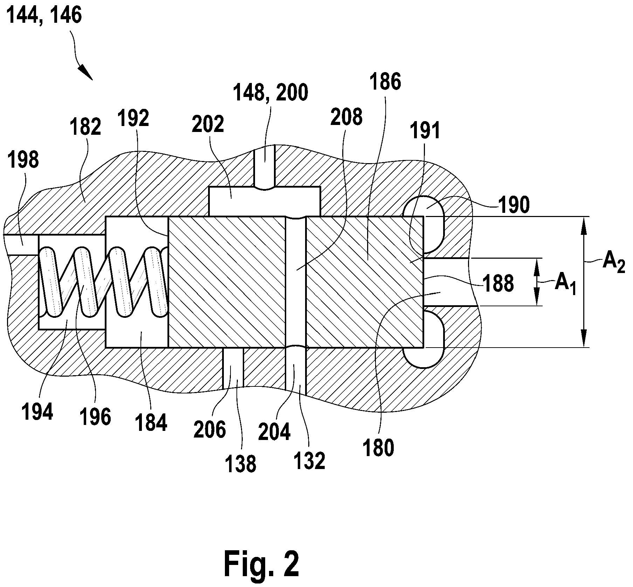

Das Ansaugsystem 116 umfasst eine erste Ansaugleitung 132 mit einer in diesem Ausführungsbeispiel mit einem ersten Vorfilter 134 versehenen ersten Ansaugstelle 136 innerhalb des Vorratstanks 112, beispielsweise unterhalb des Innentanks 122. Weiterhin umfasst das Ansaugsystem 116 eine zweite Ansaugleitung 138 mit einer, mit einem zweiten Vorfilter 140 versehenen zweiten Ansaugstelle 142. Diese zweite Ansaugstelle 142 ist in diesem Ausführungsbeispiel gemäß Figur 1 innerhalb des Heiztopfs 124 bzw. Innentanks 122 angeordnet. Die beiden Ansaugleitungen 132, 138 münden in einem Schalter 144, welcher in diesem Ausführungsbeispiel als hydraulischer Schalter 146 ausgelegt ist. Dieser hydraulische Schalter 146 stellt ein 3/2-Wege-Ventil dar und verbindet wahlweise die beiden Ansaugleitungen 132, 138 mit einer gemeinsamen Ansaugleitung 148. Details dieses hydraulischen Schalters 146 werden unten anhand von Figur 2 näher erläutert.

Die gemeinsame Ansaugleitung 148 ist mit einem 4/2-Wege-Ventil 150 verbunden. Dieses 4/2-Wege-Ventil 150 ist weiterhin mit zwei Anschlüssen 154, 156 einer Pumpenschleife 152 verbunden. In die Pumpenschleife 152 ist optional ein Sieb 158 eingelassen. Weiterhin umfasst die Pumpenschleife 152, welche ebenfalls Bestandteil des Ansaugsystems 116 ist, eine Förderpumpe 160, welche beispielsweise als Membranpumpe ausgestaltet sein kann. Von der Pumpenschleife 152 zweigt eine Rücklaufleitung 162 ab, welche im Innentank 122 oder im Heiztopf 124 mündet und welche optional mit einem Sieb 164 und/oder einer Rücklaufdrossel 166 versehen sein kann.

Weiterhin ist mit dem 4/2-Wege-Ventil 150 in dem in Figur 1 dargestellten Ausführungsbeispiel eine Förderleitung 168 verbunden. Diese Förderleitung 168, welche optional einen Feinfilter 170 und/oder einen Drucksensor 172 umfassen kann, verbindet das Ansaugsystem 116 mit dem Dosiermodul 118.

Das Dosiermodul 118 kann eine Dosierventil 174 sowie, optional, ein Sieb 176 umfassen und ist in Figur 1 lediglich symbolisch dargestellt.

Weiterhin umfasst das Dosiersystem 110 gemäß dem Ausführungsbeispiel in Figur 1 eine Steuerung 178, welche in Figur 1 lediglich symbolisch dargestellt ist. Diese Steuerung 178 kann beispielsweise ein oder mehrere Datenverarbeitungsgeräte und/oder andere elektronische Komponenten umfassen und kann zentralisiert oder auch dezentralisiert eingerichtet sein. Beispielsweise kann diese Steuerung 178 ganz oder teilweise eine Pumpensteuerung der Förderpumpe 160 umfassen. Die Steuerung 178 ist beispielsweise mit Sensorsignalen beaufschlagbar, beispielsweise Signalen des mindestens einen Füllstandssensors 128 und/oder des mindestens einen Temperatursensors 130 und/oder des mindestens einen Drucksensors 172. Vorzugsweise ist die Steuerung 178 eingerichtet, um die Systemfunktionen des Fördermoduls 114 zu steuern. Beispielsweise kann die Steuerung 178 eingerichtet sein, um eine Schaltstellung des 4/2-Wege-Ventils 150 zu steuern und/oder eine Pumpenleistung der Förderpumpe 160.

Das optionale 4/2-Wege-Ventil 150 dient einer zumindest teilweisen Entleerung der Förderleitung 168 und/oder des Dosiermoduls 118 beim Abstellen des Dosiersystems 110. Auf diese Weise kann eine erhöhte Frostsicherheit gewährleistet werden, da vorzugsweise im abgestellten Fall kein gefrierfähiges schadstoffverminderndes Medium mehr in der Förderleitung 168 und/oder dem Dosiermodul 118 enthalten ist. So kann beispielsweise während eines Betriebes des Dosiersystems 110 die in Figur 1 dargestellte Schaltstellung des 4/2-Wege-Ventils 150 eingesetzt werden, wodurch, über die erste Ansaugstelle 136 und/oder die zweite Ansaugstelle 142, schadstoffverminderndes Medium durch die Pumpenschleife 152 in die Förderleitung 168 gefördert wird. Beim Abstellen kann hingegen die Schaltstellung gewechselt werden, so dass die Förderleitung 168 mit dem zweiten Anschluss 156 verbunden ist und der erste Anschluss 154 mit der gemeinsamen Ansaugleitung 148. Ohne Umkehrung des Pumpendrehsinns bzw. der Förderrichtung wird dann schadstoffverminderndes Medium aus der Förderleitung 168 über die Pumpenschleife 152 in die Rücklaufleitung 162 gepumpt.

Weiterhin umfasst das Dosiersystem 110 und dessen Ansaugsystem 116 bei dem in Figur 1 dargestellten erfindungsgemäßen Ausführungsbeispiel eine Steuerleitung 180, welche in Figur 1 lediglich symbolisch dargestellt ist. Diese Steuerleitung 180 verbindet die Förderpumpe 160 mit dem hydraulischen Schalter 146. Beispielsweise kann die Steuerleitung 180 auf der Druckseite der Förderpumpe 160 von der Pumpenschleife 152 abzweigen, beispielsweise neben dem Abzweig der Rücklaufleitung 162. Optional kann die Steuerleitung 180 auch mit einem oder mehreren Ventilen ausgestattet sein, beispielsweise Ventilen, welche über die Steuerung 178 steuerbar sind. Die Steuerleitung 180 stellt, wie unten anhand von Figur 2 näher erläutert wird, einen Steuerdruck zur Steuerung des hydraulischen Schalters 146 bereit.

In Figur 2 ist ein Ausführungsbeispiel des hydraulischen Schalters 146 in schematischer Darstellung gezeigt. Der hydraulische Schalter 146 umfasst ein Gehäuse 182 mit einem beispielsweise zylinderförmigen Kolbenraum 184. In diesem Kolbenraum 184 ist in horizontaler Richtung gleitend ein Ventilkolben 186 gelagert. An einer ersten Stirnseite 188, an welcher der Kolbenraum 184 zusätzlich mit optionalen Erweiterungsbohrungen 190 versehen ist, zweigt von dem Kolbenraum 184 eine Bohrung der Steuerleitung 180 ab, so dass die erste Stirnseite 188 mit einem hydraulischen Druck aus der Steuerleitung 180 beaufschlagbar ist. An einer zweiten Stirnseite 192 wird der Ventilkolben 186 über ein in einem Federraum 194 gelagertes Federelement 196 mit einer mechanischen Kraft beaufschlagt. Von dem Federraum 194 zweigt eine Entlüftungsbohrung 198 ab. Diese Entlüftungsbohrung 198 dient beispielsweise einer Druckentlastung des Federraums 194.

Weiterhin mündet an der oberen Längsseite des Kolbenraums 184 eine gemeinsame Ansaugbohrung 200 in den Kolbenraum 184. Diese gemeinsame Ansaugbohrung 200 ist mit der gemeinsamen Ansaugleitung 148 verbunden. An der Mündungsstelle ist die gemeinsame Ansaugbohrung 200 mit einer Aufweitung 202 versehen, welche länglich ausgestaltet ist und sich in Richtung der Längsachse des Ventilkolbens 186 erstreckt.

Auf der der Aufweitung 202 gegenüberliegenden Längsseite weist der Kolbenraum 184 eine erste Ansaugbohrung 204 und eine zweite Ansaugbohrung 206 auf, welche mit der ersten Ansaugleitung 132 bzw. der zweiten Ansaugleitung 138 verbunden sein können. Es sei darauf hingewiesen, dass die Verbindung auch vertauscht gegenüber der in Figur 2 gezeigten Darstellung erfolgen kann. Der Ventilkolben 186 weist eine gemeinsame Ansaugbohrung 208 auf, welche je nach Schaltstellung des Ventilkolbens 186 die gemeinsame Ansaugbohrung 200 mit der der ersten Ansaugbohrung 204 oder zweiten Ansaugbohrung 206 verbindet. Anstelle der dargestellten Ausgestaltung der gemeinsamen Ansaugbohrung 200 als Bohrung kann auch beispielsweise eine Ringnut oder eine andere Art von Öffnung als gemeinsame Ansaugbohrung vorgesehen sein. Bei dem in Figur 2 gezeigten Ausführungsbeispiel ist im drucklosen Fall, also wenn der über die Steuerleitung 180 bereitgestellte Schaltdruck den Federdruck des Federelements 196 unterschreitet, die gemeinsame Ansaugbohrung 200 mit der ersten Ansaugbohrung 204 verbunden. Wie oben aufgeführt, kann jedoch auch eine Ausgestaltung erfolgen, bei welcher im drucklosen Fall die gemeinsame Ansaugbohrung 200 mit der zweiten Ansaugbohrung 206 verbunden ist. Der hydraulische Schalter 146 kann beispielsweise ganz oder teilweise in das Fördermodul 114 integriert sein, kann jedoch auch dezentralisiert von diesem angeordnet sein.

Das in Figur 1 dargestellte Dosiersystem 110 und der hydraulische gesteuerte Schalter 146 gemäß der Darstellung in Figur 2 können beispielsweise auf folgende Weise betrieben werden. So kann nach Aufbau eines typischen Systemdrucks, beispielsweise ca. 5 bar, welcher über die Steuerleitung 180 von der Förderpumpe 160 bereitgestellt wird, die Förderpumpe 160 direkt mit der ersten Ansaugbohrung 204 verbunden sein. In diesem Fall ist beispielsweise das Federelement 196 derart gewählt, dass dessen Federkraft diesen normalen typischen Systemdruck noch übersteigt, so dass es sich der hydraulische Schalter 146 in der in Figur 2 gezeigten Schaltstellung befindet. Druckschwankungen nach oben und nach unten können bis zu einer gewissen Grenze toleriert werden und ändern nichts an der hydraulischen Kopplung der Förderpumpe 160 mit der ersten Ansaugbohrung 204.

Wird der Druck anschließend gezielt über eine Schaltschwelle erhöht, zum Beispiel indem softwaregestützt eine Pumpenleistung der Förderpumpe 160 erhöht wird (beispielsweise gesteuert über die Steuerung 178), so schaltet der erfindungsgemäße hydraulische Schalter 146, indem sich der Ventilkolben 186 in Figur 2 nach links bewegt. Die Schaltschwelle wird dabei durch die Federkraft des Federelements 196 vorgegeben. Die optionale Erweiterungsbohrung 190 weist an ihrer der Steuerleitung 180 zuweisenden Seite optional eine Dichtkante 191 auf. Dichtet der Ventilkolben 186 an dieser Dichtkante 191 ab, so steht der Druck in der Steuerleitung 180 nur an der durch die Dichtkante 191 begrenzten kleineren Innenfläche der ersten Stirnseite 188 an. Diese Teilfläche, welche in Figur 2 mit A₁ bezeichnet ist, bestimmt also, gemeinsam mit dem Druck in der Steuerleitung 180, die Kraft auf den Ventilkolben 186. Übersteigt das Produkt aus dem Druck in der Steuerleitung 180 und der Teilfläche A₁ die Federkraft des Federelements 196, so hebt der Ventilkolben 186 von der Dichtkante 191 ab, und der Druck steht an der gesamten Fläche A₂ der ersten Stirnseite 188 an und bewegt den Ventilkolben 186 in Figur 2 nach links.

Durch die Bewegung des Ventilkolbens 186 schaltet der hydraulische Schalter 146 die Verbindung zwischen der Förderpumpe 160 und der ersten Ansaugbohrung 204, welche beispielsweise mit der ersten Ansaugstelle 136 verbunden sein kann (oder alternativ mit der zweiten Ansaugstelle 142) ab und stellt die Verbindung mit der jeweils anderen Ansaugstelle (das heißt der zweiten Ansaugstelle 142 bzw. der ersten Ansaugstelle 136) her.

Wird der Druck im System dann wieder in den Bereich des typischen Systemdrucks abgesenkt, so steht dieser Druck nach wie vor an der größeren Fläche A₂ der ersten Stirnfläche 188 an. Da diese Fläche größer ist als die Teilfläche A₁, ist die Schaltschwelle für die Bewegung des Ventilkolbens 186 nach rechts niedriger als für die oben beschriebene Bewegung des Ventilkolbens 186 nach links. Somit bleibt das erfindungsgemäße Ventil so geschaltet, dass die Förderpumpe 160 und die zweite Ansaugbohrung 206 verbunden bleiben. Druckschwankungen nach oben und unten bis zu einer gewissen Grenze ändern auch jetzt nichts an der hydraulischen Kopplung der Förderpumpe 160 mit der zweiten Ansaugbohrung 206.

Wird der Systemdruck dann unter eine gewissen Grenze heruntergefahren, die sich aus der Relation der Fläche A₂ und des Drucks zur Federkraft ergibt, so schaltet der erfindungsgemäße hydraulische Schalter 146, welcher insgesamt als Ventil wirkt, im Fördermodul 114 die Verbindung zwischen der Förderpumpe 160 und der zweiten Ansaugbohrung 206 wieder ab und stellt die Verbindung zwischen der Förderpumpe 160 und der ersten Ansaugbohrung 204 wieder her. Auf diese Weise lassen sich beispielsweise für die Umschaltung Hystereseeffekte und/oder unterschiedliche Schaltschwellen erzeugen. Allgemein lässt sich auf diese Weise oder auch auf andere Weise, insbesondere durch Verwendung unterschiedlicher hydraulischer Flächen, ein hydraulische Schalter 146 realisieren, der für unterschiedliche Schaltpositionen unterschiedliche Schaltschwellen aufweist. Auf diese Weise lassen sich beispielsweise auch für ein und denselben Systemdruck unterschiedliche Schaltstellungen realisieren. Dies bedeutet insbesondere, dass bei einem Systemdruck durch eine gezielte kurzfristige Druckänderung, beispielsweise nach oben oder nach unten, eine Schaltstellung geändert werden kann, um anschließend wieder zum angestrebten Systemdruck zurückkehren zu können.

Wie oben beschrieben, können die beiden Ansaugbohrungen 204, 206 je nach Auslegung wechselseitig mit der ersten Ansaugstelle 136 bzw. der zweiten Ansaugstelle 142 verbunden sein.

Über eine geeignete Software kann das System derart gesteuert werden, dass sinnvoll zwischen den beiden Ansaugstellen 136, 142 umgeschaltet werden kann. Fällt eine dieser Saugstellen 136, 142 aus, was beispielsweise von der Steuerung 178 detektiert werden kann, beispielsweise infolge eines Ansaugens von Luft und/oder einer Verstopfung (beispielsweise durch Eis), so kann das System, beispielsweise die Steuerung 178, auf die jeweils andere dieser Ansaugstellen 136, 142 umschalten und muss nicht abgestellt werden, wie dies bei üblichen Systemen der Fall ist.

## Patentansprüche

1. Dosiersystem (110) zum Dosieren eines schadstoffvermindernden Mediums in ein Abgas, insbesondere zum Einbringen eines Reduktionsmittels und/oder eines Reduktionsmittel-Vorläufers in das Abgas, umfassend einen Vorratstank (112) zum Bereitstellen des schadstoffvermindernden Mediums, weiterhin umfassend ein Ansaugsystem (116) zum Ansaugen des schadstoffvermindernden Mediums aus dem Vorratstank (112), wobei das Ansaugsystem (116) mindestens zwei Ansaugstellen (136, 142) umfasst, wobei das Dosiersystem (110) weiterhin mindestens einen Schalter (144) umfasst, welcher eingerichtet ist, um zwischen den mindestens zwei Ansaugstellen (136, 142) umzuschalten, **dadurch gekennzeichnet, dass** der Schalter (144) einen hydraulischen Schalter (146) umfasst, wobei das Ansaugsystem (116) weiterhin eine Förderpumpe (160) umfasst, wobei das Umschalten des hydraulischen Schalters (146) durch einen von der Förderpumpe (160) bereitgestellten hydraulischen Druck und/oder Unterdruck erfolgt.

2. Dosiersystem (110) nach dem vorhergehenden Anspruch, wobei der Vorratstank (112) mindestens Innentank (122) umfasst, insbesondere einen beheizbaren Innentank (122), insbesondere einen Schwalltopf und/oder einen Heiztopf (124), wobei eine erste der Ansaugstellen (136, 142) innerhalb des Innentanks (122) angeordnet ist und wobei eine zweite der Ansaugstellen (136, 142) außerhalb des Innentanks (122) angeordnet ist.

3. Dosiersystem (110) nach einem der vorhergehenden Ansprüche, weiterhin umfassend mindestens eine Steuerung (178), wobei die Steuerung (178) eingerichtet ist, um den Schalter (144) umzuschalten.

4. Dosiersystem (110) nach dem vorhergehenden Anspruch, wobei die Steuerung (178) eingerichtet ist, um die Ansaugung zu überwachen und eine Fehlfunktion in der Ansaugung festzustellen, wobei die Steuerung (178) weiterhin eingerichtet ist, um bei einer Detektion einer Fehlfunktion auf eine andere Ansaugstelle (136, 142) umzuschalten.

5. Dosiersystem (110) nach einem der vorhergehenden Ansprüche, wobei das Umschalten zwischen den Ansaugstellen (136, 142) durch eine Änderung der Pumpenleistung der Förderpumpe (160) erfolgt.

6. Dosiersystem (110) nach dem vorhergehenden Anspruch, wobei die Änderung der Pumpenleistung durch eine Datenverarbeitungseinrichtung und/oder eine Steuerung (178) programmgesteuert erfolgt.

7. Dosiersystem (110) nach einem der vorhergehenden Ansprüche, wobei der hydraulische Schalter (146) mindestens einen beweglich gelagerten Ventilkolben (186) umfasst, wobei der Ventilkolben (186) an mindestens einer ersten Seite (188) mit einem hydraulischen Kraft beaufschlagbar ist.

8. Dosiersystem (110) nach dem vorhergehenden Anspruch, wobei der Ventilkolben (186) an mindestens einer zweiten Seite (192) mit einer Kraft durch einen mechanischen Energiewandler (196), insbesondere einer Federkraft, beaufschlagbar ist.

9. Dosiersystem (110) nach einem der beiden vorhergehenden Ansprüche, wobei der Ventilkolben (186) mindestens eine gemeinsame Ansaugbohrung (200) umfasst, wobei die gemeinsame Ansaugbohrung (200) in mindestens einer ersten Schaltstellung des Ventilkolben (186) mit einer ersten Ansaugbohrung (204) und in mindestens einer zweiten Schaltstellung mit mindestens einer zweiten Ansaugbohrung (206) in Verbindung steht.

10. Dosiersystem (110) nach einem der vorhergehenden Ansprüche, wobei der hydraulische Schalter (146) für unterschiedliche Schaltpositionen unterschiedliche Schaltschwellen aufweist.

## Claims

1. Dosing system (110) for dosing a pollutant-reducing medium into an exhaust gas, in particular for introducing a reducing agent and/or a reducing agent precursor into the exhaust gas, comprising a storage tank (112) for the provision of the pollutant-reducing medium, furthermore comprising a suction system (116) for suctioning the pollutant-reducing medium out of the storage tank (112), wherein the suction system (116) comprises at least two suction points (136, 142), wherein the dosing system (110) furthermore comprises at least one switch (144) which is designed for switching between the at least two suction points (136, 142), **characterized in that** the switch (144) comprises a hydraulic switch (146), wherein the suction system (116) furthermore comprises a delivery pump (160), wherein the switching of the hydraulic switch (146) is performed by way of a hydraulic pressure and/or negative pressure provided by the delivery pump (160).

2. Dosing system (110) according to the preceding claim, wherein the storage tank (112) comprises at least one inner tank (122), in particular a heatable inner tank (122), in particular a swirl pot and/or a heating pot (124), wherein a first of the suction points (136, 142) is arranged within the inner tank (122), and wherein a second of the suction points (136, 142) is arranged outside the inner tank (122).

3. Dosing system (110) according to one of the preceding claims, furthermore comprising at least one controller (178), wherein the controller (178) is designed for switching the switch (144).

4. Dosing system (110) according to the preceding claim, wherein the controller (178) is designed to monitor the suctioning and to identify a malfunction in the suctioning, wherein the controller (178) is furthermore designed to switch to a different suction point (136, 142) if a malfunction is detected.

5. Dosing system (110) according to one of the preceding claims, wherein the switching between the suction points (136, 142) is performed by way of a change in the pump power of the delivery pump (160).

6. Dosing system (110) according to the preceding claim, wherein the change in the pump power is realized in program-controlled fashion by way of a data processing device and/or a controller (178).

7. Dosing system (110) according to one of the preceding claims, wherein the hydraulic switch (146) comprises at least one movably mounted valve piston (186), wherein the valve piston can be acted on at at least a first side (188) with a hydraulic force.

8. Dosing system (110) according to the preceding claim, wherein the valve piston (186) can be acted on at at least a second side (192) with a force of a mechanical energy converter (196), in particular a spring force.

9. Dosing system (110) according to one of the two preceding claims, wherein the valve piston (186) comprises at least one common suction bore (200), wherein the common suction bore (200) is connected, in at least a first switching position of the valve piston (186), to a first suction bore (204), and in at least a second switching position, to at least one second suction bore (206).

10. Dosing system (110) according to one of the preceding claims, wherein the hydraulic switch (146) has different switching thresholds for different switching positions.

## Revendications

1. Système de dosage (110) pour le dosage d'un milieu réduisant les substances toxiques dans un gaz d'échappement, en particulier pour l'introduction d'un réducteur et/ou d'un précurseur de réducteur dans le gaz d'échappement, comprenant un réservoir (112) pour fournir le milieu réduisant les substances toxiques, comprenant en outre un système d'aspiration (116) pour aspirer le milieu réduisant les substances toxiques à partir du réservoir (112), le système d'aspiration (116) comprenant au moins deux zones d'aspiration (136, 142), le système de dosage (110) comprenant en outre au moins un commutateur (144) qui est prévu pour effectuer une commutation entre les au moins deux zones d'aspiration (136, 142), **caractérisé en ce que** le commutateur (144) comprend un commutateur hydraulique (146), le système d'aspiration (116) comprenant en outre une pompe de refoulement (160), la commutation du commutateur hydraulique (146) s'effectuant par une pression et/ou une dépression hydraulique fournie par la pompe de refoulement (160).

2. Système de dosage (110) selon la revendication précédente, dans lequel le réservoir (112) comprend au moins un réservoir intérieur (122), en particulier un réservoir intérieur pouvant être chauffé (122), en particulier un pot de brise-jet et/ou un pot de chauffage (124), une première des zones d'aspiration (136, 142) étant disposée à l'intérieur du réservoir intérieur (122) et une deuxième des zones d'aspiration (136, 142) étant disposée à l'extérieur du réservoir intérieur (122).

3. Système de dosage (110) selon l'une quelconque des revendications précédentes, comprenant en outre au moins une commande (178), la commande (178) étant prévue pour faire commuter le commutateur (144).

4. Système de dosage (110) selon l'une quelconque des revendications précédentes, dans lequel la commande (178) est prévue pour contrôler l'aspiration et déterminer une fonction d'erreur dans l'aspiration, la commande (178) étant en outre prévue pour effectuer une commutation à une autre zone d'aspiration (136, 142) en cas de détection d'une fonction d'erreur.

5. Système de dosage (110) selon l'une quelconque des revendications précédentes, dans lequel la commutation entre les zones d'aspiration (136, 142) s'effectue par une modification de la puissance de la pompe de refoulement (160).

6. Système de dosage (110) selon la revendication précédente, dans lequel la modification de la puissance de la pompe s'effectue de manière commandée par programme par un dispositif de traitement de données et/ou une commande (178).

7. Système de dosage (110) selon l'une quelconque des revendications précédentes, dans lequel le commutateur hydraulique (146) comprend au moins un piston de soupape (186) supporté de manière déplaçable, le piston de soupape (186) pouvant être sollicité avec une force hydraulique au niveau d'au moins un premier côté (188).

8. Système de dosage (110) selon la revendication précédente, dans lequel le piston de soupape (186) peut être sollicité au niveau d'au moins un deuxième côté (192) avec une force par un convertisseur d'énergie mécanique (196), en particulier une force de ressort.

9. Système de dosage (110) selon l'une des deux revendications précédentes, dans lequel le piston de soupape (186) comprend au moins un alésage d'aspiration commun (200), l'alésage d'aspiration commun (200), dans au moins une première position de commutation du piston de soupape (186), étant en liaison avec un premier alésage d'aspiration (204) et, dans au moins une deuxième position de commutation, étant en liaison avec au moins un deuxième alésage d'aspiration (206).

10. Système de dosage (110) selon l'une quelconque des revendications précédentes, dans lequel le commutateur hydraulique (146) présente, pour différentes positions de commutation, différents seuils de commutation.
